# FASCICULE DE BREVET EUROPEEN

(11) **EP 2 053 983 B1**
(45) Date de publication et mention de la délivrance du brevet: **21.05.2014**
(21) Numéro de dépôt: 07823686.6
(22) Date de dépôt: 03.08.2007
(51) Int. Cl.: A61C 1/14, A61C 1/12, A61C 1/18

(54) **CONTRE ANGLE POUR IMPLANTOLOGIE OU CHIRURGIE COMPORTANT DES SOUS ENSEMBLES DÉMONTABLES ET NOTAMMENT UN SUPPORT INTERMEDIAIRE DE POSITIONNEMENT DE LA CARTOUCHE DE TÊTE**
IMPLANTOLOGISCHES ODER CHIRURGISCHES ZERLEGBARES WINKELHANDSTÜCK MIT ZWISCHENTRÄGER ZUR POSITIONIERUNG DER KOPFEINHEIT
COUNTER ANGLE FOR IMPLANTOLOGY OR SURGERY COMPRISING REMOVABLE SUB-ASSEMBLIES AND IN PARTICULAR AN INTERMEDIATE POSITIONING SUPPORT FOR THE HEAD CARTRIDGE

(30) Priorité: 07.08.2006 FR 0607177
(43) Date de publication de la demande: 06.05.2009
(73) Titulaire: MICRO MEGA INTERNATIONAL MANUFACTURES, 25000 Besançon (FR)
(72) Inventeur: PERNOT, Jacques, F-25870 Vieilley (FR); BOINOT, Jean Claude, F-25640 Rigney (FR)
(74) Mandataire: Poupon, Michel
(86) Numéro de dépôt international: PCT/FR2007/051777
(87) Numéro de publication internationale: WO 2008/017782

(56) Documents cités:
- DE-U1- 8 535 656
- FR-A- 2 466 978
- FR-A- 2 873 566
- FR-A1- 2 393 978
- FR-A1- 2 516 783

## Description

La présente invention concerne un contre-angle pour implantologie ou chirurgie comportant des sous-ensembles démontrables. Le document FR 2 873 566 représente l'état de la technique le plus proche et décrit le préambule de la revendication 1 de la présente demande.

Les contre-angles destinés à l'implantologie ou à la chirurgie sont soumis à de fortes sollicitations, dues aux contraintes mécaniques (couple de 70Ncm environ et aux contraintes environnantes telles que sang, salive, débris, os, etc...)

Entre chaque patient, les règles d'hygiène imposent donc un nettoyage profond préalable à la stérilisation. Pour obtenir un degré performant de nettoyage, il est primordial que ces types de contre-angles présentent une bonne démontabilité et remontabilité de ses principaux sous-ensembles, et ce, le plus aisément possible, sans outillage, sans efforts particuliers, sans beaucoup d'écolage mais avec beaucoup d'efficacité et de fiabilité, d'où l'objectif de la présente invention.

Cet objectif est atteint par un contre-angle destiné à l'implantologie ou la chirurgie, avec une tête pour maintenir et entraîner en rotation un instrument autour de son axe longitudinal, et un manche contenant non limitativement une liaison assurant la liaison avec une motorisation extérieure, et un ensemble réducteur avec un pignon de sortie, caractérisé en ce que le contre-angle est formé de sous-ensembles démontables, dont deux sous-ensembles coaxiaux d'un manche démontable et un sous-ensemble appelé support intermédiaire comportant un pignon d'entrée s'engrenant au pignon de sortie du réducteur, et un pignon d'extrémité montés sur le même arbre de rotation et à l'intérieur d'un corps cylindrique creux, ledit support intermédiaire étant monté à coulissement libre selon un axe à l'intérieur d'une partie centrale d'un corps de tête et permettant le positionnement dans la tête d'une cartouche de tête amovible ainsi que son entraînement en rotation, lorsque tous les sous-ensembles sont montés ensemble pour former le contre-angle, le support intermédiaire comportant un moyen d'indexation du corps de tête par rapport au manche.

Selon une variante d'exécution, le support intermédiaire est positionné obliquement dans le corps de tête, selon une direction formant un angle avec le direction de l'instrument.

Préférentiellement, les sous-ensembles démontables du manche comportent des moyens d'indexation rapide l'un par rapport à l'autre.

Selon un premier mode de réalisation du positionnement axial de la cartouche par le support intermédiaire, un ou des retours plats, et dirigés axialement, d'une découpe de l'extrémité d'un manchon cylindrique du support intermédiaire, vient ou viennent s'appliquer sur des appuis plans, prévus dans la cartouche de tête et perpendiculairement à l'axe de rotation de la tête, une rondelle élastique prétendue étant prévue entre la sous face de la cartouche de tête un plan d'appui bas du corps de tête et limitant le jeu résiduel entre la cartouche et le corps de tête.

Le support intermédiaire étant alors positionné en butée sur un épaulement intérieur du corps de tête et perpendiculaire à l'axe du support tandis que la cartouche est positionnée en appui franc sur un épaulement du corps de tête perpendiculaire à l'axe de rotation de l'outil.

Selon un autre mode de réalisation du positionnement axial, le support intermédiaire est équipé d'un système de verrouillage télescopique formé d'un verrou coulissant en forme de manchon cylindrique coulissant à l'intérieur d'une bague coaxiale et alignée avec le corps extérieur du support, le verrou coulissant comportant une butée intérieure en saillie pouvant comprimer un ressort maintenu par un fond de bague, et comportant un ergot en saillie vers l'extérieur et coulissant dans une rainure de guidage de la bague parallèle à l'axe longitudinal du support.

Dans tous les cas, le corps du support comporte également un moyen d'indexation, préférentiellement un prolongement en forme de languette en saillie vers le manche du contre-angle, parallèle à l'axe, dépassant le pignon d'entrée et apte à se loger lorsque le support est positionné dans le corps de tête, dans une ouverture d'une partie cylindrique du corps de tête et formant un coude par rapport à la partie centrale du corps de tête.

Par ailleurs, le manche est formé par assemblage de deux sous-ensembles dont un sous-ensemble intérieur supportant un ensemble réducteur et coulissant librement dans un sous ensemble extérieur, le sous-ensemble intérieur comportant une avancée cylindrique dépassant le pignon de sortie du réducteur et comportant une fente et dans laquelle s'engage la languette du support intermédiaire.

Dans tous les cas, le contre-angle est démontable en deux parties, tête et manche, chacune démontable en sous-ensembles. Ainsi la liaison tête-manche est la première à être démontée et la dernière à être remontée. Elle doit comporter un moyen d'indexation fiable pour assurer la transmission des efforts, et prévu sur le support intermédiaire.

En outre, dans tous les cas, la liaison manche-tête est verrouillée préférentiellement par une douille centrale déplaçable axialement et comportant une position d'effacement, préférentiellement mais non limitativement escamotée dans le manche permettant la désolidarisation de tous les sous-ensembles formant le contre-angle, et une position de travail solidarisant le manche et le corps de tête. De façon équivalente, la douille pourrait être à l'inverse prévue sur le corps de tête et comporter une position escamotée dans le corps de tête.

On comprendra mieux l'invention à l'aide de la description ci-après, faite en référence aux figures annexées suivantes :
- **figure 1** **:** vue générale d'un contre-angle selon l'invention,
- **figure 2** **:** vue en éclaté d'un contre-angle selon l'invention et selon un premier mode de positionnement axial,
- **figure 3** **:** vue en coupe et partielle en contre-angle de la figure 2,
- **figure 4** **:** vue générale montrant le support intermédiaire en place, le corps de tête n'étant pas représenté,
- **figure 5** : vue en coupe partielle d'un contre-angle selon l'invention selon un autre mode de positionnement axial.

Un contre-angle selon l'invention se compose d'une tête (1) montée de façon aisément démontable et remontable sur un manche (2) formé de deux sous ensembles (3) et (4) coaxiaux et dissociables.

En configuration d'utilisation (non représentée) une douille centrale (5) déplaçable axialement solidarise le manche (2) et le corps de tête (10) portant la tête (1), par exemple par vissage sur un filetage externe (6) de la tête (1).

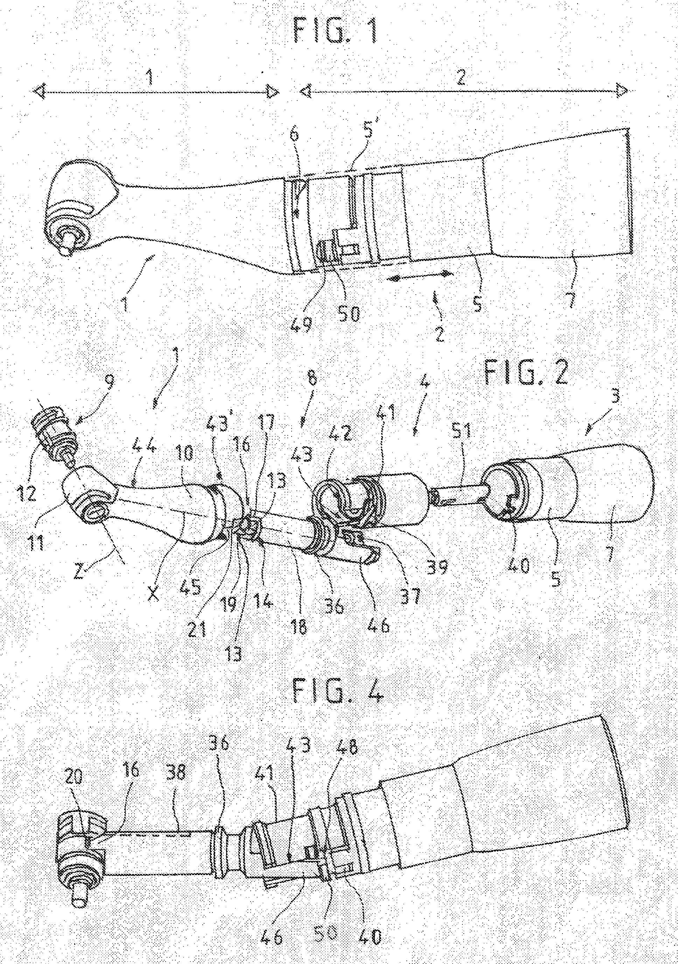

La douille présente, sur le mode de réalisation non limitatif représenté sur les figures, une position de travail (représentée en pointillés (5') selon laquelle elle est solidaire de la tête et une position d'effacement, de préférence escamotable, à l'intérieur d'un déflecteur (7) cylindrique ou sensiblement conique du manche (2), position représentée sur les figures et notamment sur la figure 1, après dévissage par exemple, puis déplacement axial.

On se rapporte à présent à la figure 2 qui montre le contre-angle selon l'invention dissocié en sous-ensembles avec :
- les deux sous-ensembles du manche respectivement un sous-ensemble extérieur (3) et un sous-ensemble intérieur (4),
- un support intermédiaire (8)
- une tête (1) avec une cartouche de tête (9) et un corps de tête (10).

La particularité du dispositif selon l'invention réside principalement dans le concept du maintien de la cartouche de tête (9) dans le corps de tête (10) par l'intermédiaire d'une action du support intermédiaire (8), par exemple mais non limitativement en position oblique par rapport à la direction du corps de tête (10).

Le principe de la cartouche de tête amovible est déjà connu en soi. Il s'agit d'un sous-ensemble comportant principalement des moyens de retenue d'un instrument et d'entraînement en rotation de celui-ci autour de son axe longitudinal. Le mouvement de rotation est communiqué à des engrenages de la cartouche amovible après solidarisation et verrouillage de celle-ci dans le corps de tête (10).

Dans le cas décrit, une goupille (11) solidaire du corps de tête (10) positionne et immobilise en rotation la cartouche munie d'une rainure (12) axiale coopérant avec ladite goupille transversale. Dans une autre réalisation non représentée, un ergot solidaire de la cartouche pourrait coopérer avec une rainure pratiquée dans le corps de tête. La cartouche de tête (9) coulisse librement dans le corps de tête (10).

Le positionnement axial de la cartouche (9) et l'entraînement en rotation sont assurés par l'introduction du support intermédiaire (8) dans le corps de tête (10).

Les figures 2 à 4 montrent un mode de réalisation du positionnement axial de ladite cartouche par le support intermédiaire (8).

Un ou des retours plats (13) (et dirigés axialement) d'une découpe (14) de l'extrémité d'un manchon cylindrique (18) du support intermédiaire (8), vient ou viennent s'appliquer sur des appuis plans (14') prévus dans la cartouche de tête et perpendiculairement à l'axe de rotation (15) de la tête.

Une rondelle élastique prétendue (16') prévue entre la sous face de la cartouche de tête et un plan d'appui bas du corps de tête limite le jeu résiduel entre la cartouche (9) et le corps de tête (10).

Les retours plats (13) constituent par ailleurs les sous-faces d'une avancée en forme de nez (16) du manchon cylindrique (18), cette avancée étant formée également d'une découpe plane supérieure (17) disposée obliquement par rapport à l'axe du manchon (18) et du support intermédiaire (8), et étant terminée par deux pans coupés (19) perpendiculaires à l'axe du manchon.

L'avancée en forme de nez (16) est destinée à s'engager dans une encoche complémentaire (20) de la cartouche de tête (voir figures 2 à 4).

Un pignon d'extrémité (21) du support intermédiaire s'engrène, à travers la découpe (14) inférieure et la découpe (17) supérieure, avec un pignon de la cartouche de tête.

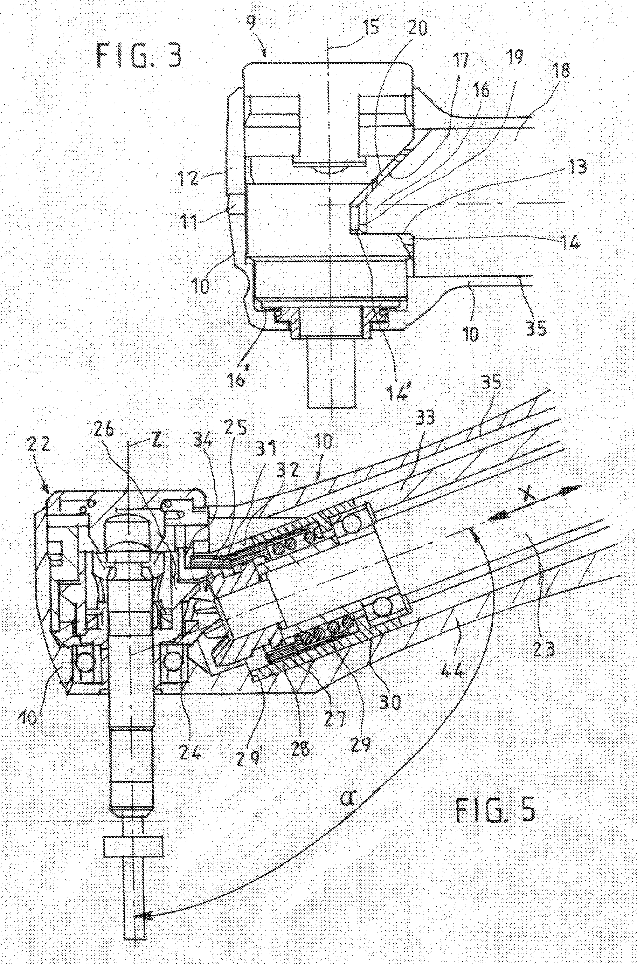

La figure 5 montre un autre mode de réalisation du positionnement axial d'une autre cartouche de tête (22) par un autre support intermédiaire (23).

Selon ce mode de réalisation, le support intermédiaire (23) est positionné en butée sur un épaulement (29') intérieur du corps de tête et perpendiculaire à l'axe du support (23) tandis que la cartouche est positionnée en appui franc sur un épaulement (24) du corps de tête perpendiculaire à l'axe de rotation de l'outil, la sous face de la cartouche ne comportant pas de rondelle élastique prétendue comme dans le mode de réalisation précédent. Le positionnement relatif du pignon d'extrémité (25) du support et du pignon d'entrée (26) de la cartouche de tête sont garantis.

Le support intermédiaire (23) est équipé d'un système de verrouillage télescopique formé d'un verrou coulissant (27) en forme de manchon cylindrique coulissant à l'intérieur d'une bague (28) coaxiale et alignée avec le corps extérieur (33) du support (23).

Le verrou coulissant (27) comporte une butée intérieure en saillie pouvant comprimer un ressort (29) maintenu par un fond de bague (30), et comporte un ergot (31) en saillie vers l'extérieur et coulissant dans une rainure de guidage (32) de la bague (28) parallèle à l'axe longitudinal (X) du support (23).

L'ergot du verrou peut donc coulisser axialement mais il est bloqué en rotation.

Une compression selon l'axe (X) du ressort (29) sur le verrou (27) génère une composante( Z) sur l'axe de rotation de la cartouche de tête et assure un serrage irréversible et efficace par l'intermédiaire de l'appui de l'ergot (31) sur un épaulement plan (34) de la cartouche, perpendiculaire à l'axe (Z).

L'inclinaison de l'ergot par rapport à l'axe (X) est donné en fonction de l'inclinaison (α) de l'axe (X) par rapport à l'axe (Z).

Dans les deux modes de réalisation, le support intermédiaire (8) ou (23) coulisse librement dans un alésage (35) ou des alésages coaxiaux du corps de la tête (10) jusqu'à ce qu'un épaulement intérieur dudit corps de tête (10) se positionne en butée axiale contre un épaulement annulaire (36) du corps du support intermédiaire.

Les pignons d'entrée (37) et d'extrémité (25) ou (21) du support intermédiaire sont classiquement montés sur un même arbre de rotation monté sur des paliers à l'intérieur du corps cylindrique extérieur du support intermédiaire.

D'autres solutions pourraient être envisagées par exemple par un picot en saillie à l'intérieur de l'alésage du corps de tête coopérant avec une rainure de guidage (38) prévue sur le dessus du corps de support et parallèle à son axe (X) (voir figure 4). L'arrêt en rotation du support intermédiaire dans le corps de tête est garanti par la languette (46) qui coopère avec la fente (45) dudit corps de tête.

Le corps du support comporte également un prolongement en forme de languette (46) en saillie vers le manche du contre-angle, parallèle à l'axe (X), dépassant le pignon d'entrée (37) et dont la fonction sera détaillée plus loin.

Le corps de tête (10) présente en outre une partie cylindrique (43) de solidarisation avec le manche formant un coude avec la partie centrale (44) dans laquelle coulisse le support intermédiaire. Pour cette raison, la partie cylindrique (43) comporte une ouverture (45) dans laquelle se loge la languette (46) inclinée par rapport à l'axe central de la partie cylindrique (43) car parallèle à l'axe (X) du support intermédiaire.

On décrit à présent le manche et ses deux sous-ensembles (3) et (4) coaxiaux.

Le sous-ensemble extérieur (3) supporte intérieurement un ensemble réducteur (4) qui coulisse librement à l'intérieur du sous-ensemble (3) mais qui est bloqué en rotation par exemple par un ergot (39) en saillie sur le sous-ensemble intérieur (4) et s'engageant dans une fente (40) de l'ensemble extérieur, qui est complètement découverte et visible quand la douille (5) est totalement escamotée dans le déflecteur (7).

Le sous-ensemble intérieur comporte une avancée cylindrique (41) dépassant le pignon de sortie (42) du réducteur et comportant une fente (43) et dans laquelle s'engage la languette (46) du support intermédiaire décrite plus haut.

L'ensemble réducteur comporte une liaison (51) classique pour assurer la liaison avec une motorisation extérieure.

On décrit à présent le mode de montage ou remontage des différents sous-ensembles.

D'une part on monte les sous-ensembles du corps de tête en introduisant la cartouche de tête (9) dans le corps de tête (10) en indexant sa position grâce à l'ensemble goupille (11)-rainure (12), puis on introduit le support intermédiaire (8 ou 23) ou dans l'alésage interne du corps de tête en indexant la position du support grâce à l'ensemble languette-fente (45, 46) ou tout autre moyen d'indexation et on le pousse jusqu'à ce que l'épaulement annulaire (36) vienne en butée contre un épaulement intérieur prévu dans le corps de tête.

D'autre part, on monte le manche en introduisant le sous-ensemble intérieur (4) dans le sous-ensemble extérieur (3) en les indexant l'un par rapport à l'autre en introduisant l'ergot (39) dans la fente (40), la douille (5) étant escamotée, de façon à former le manche du contre-angle. Tout autre moyen d'indexation peut être envisagé.

On présente alors le manche à l'entrée du corps de tête, en les indexant l'un par rapport à l'autre, en introduisant la languette (46) dans le dégagement (43) afin d'assurer l'approche de prépositionnement, la liaison angulaire étant garantie par le secteur saillant du manche (3) et l'encoche (19) du corps de tête, jusqu'à ce que le pignon d'entrée du support s'engrène avec le pignon de sortie (42) de l'ensemble intérieur du manche. Tout autre moyen d'indexation peut être envisagé.

Dans la position d'engrènement, la sous face de la languette (46) se place contre un méplat (48) prévu sur le corps du sous-ensemble intérieur, dans le prolongement de la fente (43).

L'action du montage-remontage se termine par le déplacement de la douille (5) vers le corps de tête et sa solidarisation sur celle-ci, par exemple par vissage. Par cette action finale, un épaulement interne du manche exerce une poussée axiale sur le sous-ensemble intérieur (4). Un biais pratiqué sur le corps (41) réoriente cette poussée axiale sur le support oblique qui verrouille la cartouche.

Le démontage commence par la désolidarisation et l'escamotage de la douille (5). Le manche peut alors être extrait par glissement et ses deux sous-ensembles désolidarisés.

Pour faciliter l'extraction du support intermédiaire, on a prévu un retour (50) en saillie vers l'extérieur à l'extrémité de la languette (46) et un dégagement (49) dans le fond du logement (45) de la languette permettant d'engager la pointe d'un outil pour pousser le retour (50) et dégager le support intermédiaire.
Le dispositif selon l'invention est aisément démontable et remontable, ce qui facilite le maintien des règles d'hygiène.

Le remontage des différents sous-ensembles est facilité et rendu fiable et rapide car tous les sous-ensembles sont indexés les uns par rapport aux autres. Les moyens d'indexation peuvent présenter des variantes d'exécution différentes de celles décrites à titre d'exemples non limitatifs.

Les sous-ensembles décrits et revendiqués sont de conceptions complémentaires pour former un nouveau concept de contre-angle de complète démontabilité et remontabilité sans utilisation d'outil spécifique tout en permettant la transmission d'efforts importants nécessaires en implantologie.

## Revendications

1. Contre-angle destiné à l'implantologie ou la chirurgie, avec une tête pour maintenir et entraîner en rotation un instrument autour de son axe longitudinal (Z), et un manche (2) contenant non limitativement une liaison (51) assurant la liaison avec une motorisation extérieure, et un ensemble réducteur avec un pignon de sortie (42), le contre-angle étant formé de sous-ensembles démontables, dont deux sous-ensembles (3,4) coaxiaux d'un manche démontable et un sous-ensemble appelé support intermédiaire (8, 23) comportant un pignon d'entrée (37) s'engrenant au pignon de sortie (42) du réducteur, et un pignon d'extrémité (25, 21) montés sur le même arbre de rotation et à l'intérieur d'un corps cylindrique creux (33), ledit support intermédiaire (8, 23) étant monté à coulissement libre selon un axe (X) à l'intérieur d'une partie centrale (44) d'un corps de tête (10) et permettant le positionnement dans la tête d'une cartouche de tête amovible ainsi que son entraînement en rotation, lorsque tous les sous-ensembles sont montés ensemble pour former le contre-angle, **caractérisé en ce que** le support intermédiaire (8, 23) comportant un moyen d'indexation (46) du corps de tête (10) par rapport au manche (2).

2. Contre-angle selon la revendication 1, **caractérisé en ce que** les sous-ensembles (3,4) comportent des moyens d'indexation rapide l'un par rapport l'autre (39, 40).

3. Contre-angle selon l'une des revendication 1 à 2, **caractérisé en ce que** le support intermédiaire (8, 23) est positionné obliquement dans le corps de tête, selon une direction (X) formant un angle (α) avec le direction (Z) de l'instrument.

4. Contre-angle selon l'une des revendications 1 et 3, **caractérisé en ce que** un ou des retours plats (13), et dirigés axialement, d'une découpe (14) de l'extrémité d'un manchon cylindrique (18) du support intermédiaire (8), vient ou viennent s'appliquer sur des appuis plans (14'), prévus dans la cartouche de tête et perpendiculairement à l'axe de rotation (15) de la tête, une rondelle élastique prétendue étant prévue entre la sous face de la cartouche de tête un plan d'appui bas du corps de tête et limitant le jeu résiduel entre la cartouche (9) et le corps de tête (10).

5. Contre-angle selon l'une des revendications 1 et 3, **caractérisé en ce que** le support intermédiaire (23) est positionné en butée sur un épaulement (29) intérieur du corps de tête et perpendiculaire à l'axe du support (23) tandis que la cartouche est positionnée en appui franc sur un épaulement (24) du corps de tête perpendiculaire à l'axe de rotation de l'outil.

6. Contre-angle selon la revendication 5, **caractérisé en ce que** le support intermédiaire (23) est équipé d'un système de verrouillage télescopique formé d'un verrou coulissant (27) en forme de manchon cylindrique coulissant à l'intérieur d'une bague (28) coaxiale et alignée avec le corps extérieur (33) du support (23), le verrou coulissant (27) comportant une butée intérieure en saillie pouvant comprimer un ressort (29) maintenu par un fond de bague (30), et comportant un ergot (31) en saillie vers l'extérieur et coulissant dans une rainure de guidage (32) de la bague (28) parallèle à l'axe longitudinal (X) du support (23).

7. Contre-angle selon l'une des revendications 1 à 6, **caractérisé en ce que** le corps du support comporte également un prolongement en forme de languette (46) en saillie vers le manche du contre-angle, parallèle à l'axe (X), dépassant le pignon d'entrée (37) et apte à se loger lorsque le support (8,23) est positionné dans le corps de tête, dans une ouverture (45) d'une partie cylindrique (43) du corps de tête et formant un coude par rapport à la partie centrale (44) du corps de tête.

8. Contre-angle selon la revendication 7, **caractérisé en ce que** le manche est formé par assemblage de deux sous-ensembles (3,4) dont un sous-ensemble intérieur (3) supportant un ensemble réducteur et coulissant librement dans un sous ensemble extérieur (4), le sous-ensemble intérieur comportant une avancée cylindrique (41) dépassant le pignon de sortie (42) du réducteur et comportant une fente (43) et dans laquelle s'engage la languette (46) du support intermédiaire.

9. Contre-angle selon l'une des revendications 1 à 8, **caractérisé en ce qu'**il comporte une douille centrale (5) déplaçable axialement et comportant une position d'effacement permettant la désolidarisation du manche et du corps de tête, et une position de travail solidarisant le manche et le corps de tête.

10. Contre-angle selon la revendication 9, **caractérisé en ce que** la douille est solidarisée par vissage.

11. Contre-angle selon l'une des revendications 9 à 10, **caractérisé en ce que** la douille est escamotée dans le manche en position d'effacement.

## Patentansprüche

1. Winkelstück für die Implantalogie oder für die Chirurgie mit einem Kopf zum Halten sowie zum Antreiben eines Instruments zur Drehung um dessen Längsachse (Z) und mit einem Griff (2), der nicht abschließend über eine Verbindung (51) verfügt, die die Verbindung mit einem externen Antrieb sicherstellt, und mit einer ein Antriebsrad (42) aufweisenden Reduziereinheit, wobei das Winkelstück durch auseinandernehmbare Untereinheiten gebildet ist, von denen zwei Untereinheiten (3, 4) koaxial mit einem abnehmbaren Griff sind und eine Zwischenträger (8, 23) genannte Untereinheit über ein Eingangsrad (37) verfügt, das mit dem Ausgangsrad (42) des Reduzierers in Eingriff ist, und wobei ein Endrad (25, 21) an der gleichen Drehwelle angebracht und im Innern eines Hohlzylinderkörpers (33) angebracht ist, wobei der Zwischenträger (8, 23) frei verschiebbar entlang einer Achse (X) im Inneren eines Mittenabschnittes (44) eines Kopfkörpers (10) angebracht ist und das Anordnen in dem Kopf einer abnehmbaren Kopfkassette als auch den Antrieb zur Drehung gestattet, während alle Untereinheiten zusammengebaut sind, um das Winkelstück zu bilden, **dadurch gekennzeichnet, dass** der Zwischenträger (8, 23) ein Indexiermittel (46) des Kopfkörpers (10) in Bezug auf den Griff (10) aufweist.

2. Winkelstück nach Anspruch 1, **dadurch gekennzeichnet, dass** die Untereinheiten (3, 4) Schnellindexiermittel (39, 40) für ihren gegenseitigen Bezug aufweisen.

3. Winkelstück nach einem der Ansprüche 1 bis 2, **dadurch gekennzeichnet, dass** der Zwischenträger (8, 23) in Bezug auf den Kopfkörper in einer einen Winkel (α) mit der Richtung (Z) des Instruments bildenden Richtung (X) schräg angeordnet ist.

4. Winkelstück nach einem der Ansprüche 1 bis 3, **dadurch gekennzeichnet, dass** ein oder mehrere flache, axial ausgerichtete rückseitige Teile (13) eines Freischnitts (14) des Endes einer zylinderförmigen Muffe (18) des Zwischenträgers (8) an flachen Anlageteilen (14') zur Anlage kommt beziehungsweise kommen, die in der Kopfkassette rechtwinklig zur Drehachse (15) der Welle vorgesehen sind, wobei eine elastische vorstehende Beilagscheibe zwischen der Unterseite der Kopfkassette sowie zwischen einer unteren Anlageebene des Kopfkörpers vorgesehen ist und das Restspiel zwischen der Kassette (9) und dem Kopfkörper (10) reduziert.

5. Winkelstück nach einem der Ansprüche 1 bis 3, **dadurch gekennzeichnet, dass** der Zwischenträger (23) in Anschlag an einen innenseitigen Absatz (29) des Kopfkörpers und rechtwinklig zu der Achse des Trägers (23) angeordnet ist, während die Kassette in einem freien Anschlag an einen Absatz (24) des Kopfkörpers rechtwinklig zu der Drehachse des Werkzeugs positioniert ist.

6. Winkelstück nach Anspruch 5, **dadurch gekennzeichnet, dass** der Zwischenträger (23) mit einem teleskopierbaren Verriegelungssystem ausgestattet ist, das aus einer Gleitverriegelung (27) in Gestalt einer zylinderförmigen Muffe gebildet ist, die im Innern einer koaxialen Hülse (28) angeordnet sowie mit dem Außenkörper (33) des Trägers (23) ausgerichtet ist und die einen auskragenden innenseitigen Anschlag aufweist, der eine Feder (29) zusammendrücken kann, die auf einem Boden eines Ringteiles (30) gehalten ist, und das einen Zapfen (31) aufweist, der nach außen auskragt und in einer Führungsnute (32) der Hülse (28) gleitet, die parallel zur Längsachse (X) des Trägers (23) ausgerichtet ist.

7. Winkelstück nach einem der Ansprüche 1 bis 6, **dadurch gekennzeichnet, dass** der Trägerkörper weiterhin eine Verlängerung in Gestalt einer Zunge (46) aufweist, die gegen den Griff des Winkelstücks auskragt, parallel zu der Achse (X) ist, das Eingangsrad (37) überragt und dazu eingerichtet ist, bei Anordnen des Trägers (8, 23) in dem Kopfkörper in einer Öffnung (45) eines zylinderförmigen Abschnitts (43) zu liegen zu kommen und in Bezug auf den Mittenabschnitt (44) des Kopfkörpers eine Verknieung zu bilden.

8. Winkelstück nach Anspruch 7, **dadurch gekennzeichnet, dass** der Griff durch Zusammenbau von zwei Untereinheiten (3, 4) gebildet ist, von denen eine innenseitige Untereinheit (3) eine Reduziereinheit trägt und frei in einer äußeren Untereinheit (4) gleitet, wobei die innenseitige Untereinheit einen zylinderförmigen Vorsprung (41) trägt, der das Ausgangsrad (42) des Reduzierers überragt sowie einen Schlitz (43) aufweist und mit dem die Zunge (46) des Zwischenträgers in Eingriff ist.

9. Winkelstück nach einem der Ansprüche 1 bis 8, **dadurch gekennzeichnet, dass** es über eine mittige Hülse (5) verfügt, die axial verschiebbar ist und eine Rückzugsposition aufweist, die das Voneinanderlösen des Griffes sowie des Kopfkörpers gestattet, und eine Arbeitsstellung aufweist, die den Griff sowie den Kopfkörper miteinander verbindet.

10. Winkelstück nach Anspruch 9, **dadurch gekennzeichnet, dass** die Hülse durch Verschrauben verbunden ist.

11. Winkelstück nach einem der Ansprüche 9 bis 10, **dadurch gekennzeichnet, dass** die Hülse in dem Griff in der Rückzugsposition eingefahren ist.

## Claims

1. Contra-angle for implantology or surgery, comprising a head for holding and rotating an instrument about the longitudinal axis (Z) thereof, and a sleeve (2) comprising but not limited to having a connection means (51) for providing a connection to an external motor and a reducing assembly with an output gear (42), the contra-angle being formed by detachable subassemblies, two of the subassemblies (3, 4) being arranged coaxially to a detachable sleeve and one subassembly referred to as an intermediate support (8, 23) comprising an input gear (37) meshing with the output gear of the reducing assembly, and an end gear (25, 21) mounted on the same rotating shaft and inside a hollow cylindrical body (33), said intermediate support (8, 23) being mounted to slide freely along an axis (X) inside a central part (44) of a head body (10) and enabling the positioning in the head of a removable head cartridge as well as its rotational drive, when all of the subassemblies are mounted together to form the contra-angle, **characterised in that** the intermediate support (8, 23) comprises a means for indexing (46) the head body (10) in relation to the sleeve (2).

2. Contra-angle according to claim 1, **characterised in that** the subassemblies (3, 4) comprise means for fast indexing in relation to one other (39, 40).

3. Contra-angle according to one of claims 1 or 2, **characterised in that** the intermediate support (8, 23) is positioned obliquely in the head body, in a direction (X) forming an angle (α) with the direction (Z) of the instrument.

4. Contra-angle according to one of claims 1 or 3, **characterised in that** one or more flat (13) and axially directed returns of an end cut-out (14) of a cylindrical sleeve (18) of the intermediate support (8) is or are applied onto flat bearing surfaces (14') provided in the head cartridge and perpendicular to the axis of rotation (15) of the head, a pretensioned resilient washer being provided between the underside of the head cartridge and a bottom bearing plane of the head body, limiting the residual play between the cartridge (9) and the head body (10).

5. Contra-angle according to either of claims 1 and 3, **characterised in that** the intermediate support (23) is positioned in a stop position on a shoulder (29) inside the head body and perpendicular to the support axis (23), while the cartridge is positioned bearing completely on a shoulder (24) of the head body perpendicular to the axis of rotation of the tool.

6. Contra-angle according to claim 5, **characterised in that** the intermediate support (23) is equipped with a telescopic locking system formed by a sliding lock (27) in the form of a cylindrical sleeve sliding inside a coaxial bushing (28) aligned with the outer body (33) of the support (23), the sliding lock (27) comprising a projecting internal stop capable of compressing a spring (29) held by a bushing base (30), said internal stop comprising an outwardly projecting lug (31) sliding in a guiding slot (32) of the bushing (28) parallel to the longitudinal axis (X) of the support (23).

7. Contra-angle according to one of claims 1 to 6, **characterised in that** the support body support also comprises an extension in the form of a tongue (46) projecting toward the sleeve of the contra-angle, parallel to the axis (X), passing beyond the input gear (37) and capable of being accommodated when the support (8, 23) is positioned in the head body, in an opening (45) of a cylindrical part (43) of the head body and forming a bend in relation to the central part (44) of the head body.

8. Contra-angle according to claim 7, **characterised in that** the sleeve is formed by the assembly of the two subassemblies (3, 4) comprising an inner subassembly (3) supporting a reducing assembly and sliding freely within an outer subassembly (4), the inner subassembly comprising a cylindrical overhang (41) passing beyond the output gear (42) of the reducing assembly and comprising a slot (43) and into which the tongue (46) of the intermediate support engages.

9. Contra-angle according to one of claims 1 to 8, **characterised in that** it comprises a central, axially displaceable casing (5) having a withdrawn position, enabling the sleeve and the head body to be disconnected, and a working position joining the sleeve to the head body.

10. Contra-angle according to claim 9, **characterised in that** the casing is joined by being screwed on.

11. Contra-angle according to one of claims 9 to 10, **characterised in that** the casing is retracted in the sleeve in a withdrawn position.
